# EUROPÄISCHE PATENTSCHRIFT

(11) **EP 1 104 556 B1**
(45) Veröffentlichungstag und Bekanntmachung des Hinweises auf die Patenterteilung: **13.11.2002**
(21) Anmeldenummer: 99950495.4
(22) Anmeldetag: 02.08.1999
(51) Int. Cl.: G06F 1/08, G06F 1/32, G06F 1/14

(54) **VERFAHREN UND ANORDNUNG ZUR TAKTVERSORGUNG PROZESSORGESTEUERTER GERÄTE**
METHOD AND CIRCUIT FOR CLOCK-PULSE SUPPLY OF PROCESSOR-CONTROLLED APPARATUS
PROCEDE ET DISPOSITIF POUR L'ALIMENTATION EN FREQUENCE D'HORLOGE D'APPAREILS COMMANDES PAR PROCESSEUR

(30) Priorität: 14.08.1998 DE 19836956
(43) Veröffentlichungstag der Anmeldung: 06.06.2001
(73) Patentinhaber: SIEMENS AKTIENGESELLSCHAFT, 80333 München (DE)
(72) Erfinder: HAUBOLD, Sören, D-81371 München (DE)
(86) Internationale Anmeldenummer: DE9902388
(87) Internationale Veröffentlichungsnummer: WO00010072

(56) Entgegenhaltungen:
- EP-A- 0 316 943
- US-A- 5 167 024
- US-A- 5 461 652

## Beschreibung

Die Erfindung bezieht sich auf ein Verfahren und eine Anordnung zur Taktversorgung prozessorgesteuerter Geräte, insbesondere mobiler oder tragbarer Geräte, wie beispielsweise Mobilfunkgeräte oder tragbare Computer.

In mobilen prozessorgesteuerten Geräten, wie beispielsweise Mobilfunkgeräten oder tragbaren Computern spielt der Stromverbrauch eine bedeutende Rolle. Weltweit werden größte Anstrengungen unternommen, um die Stromaufnahme der Geräte, insbesondere in einem Bereitschaftsmodus bzw. Standbymodus mit möglichst wenig Strom betriebsbereit zu halten (Siehe US-A-5 167 024, EP-A-0 316 943 oder US-A-5 461 652).

Eine allgemein bekannte Maßnahme zum Stromsparen besteht darin, die Versorgungsspannung von nicht benutzten Komponenten durch eine Steuereinrichtung im Gerät vorübergehend zu vermindern oder abzuschalten. Die Empfangseinheit und die Sendeeinheit in Mobilfunkgeräten oder die Festplatte und der Bildschirm in tragbaren Computern sind Beispiele für Komponenten, die von der Steuereinrichtung bei Nichtnutzung von der Spannungsversorgung abgeschaltet und zur Nutzung während des Betriebs wieder eingeschaltet werden können.

Üblicherweise ist die Steuereinrichtung zum Ein- und Ausschalten bestimmter Funktionsmodule taktgesteuert. Außerdem verfügen immer mehr prozessorgesteuerte Geräte über eine Echtzeituhr, der die Taktfrequenz von 32,768 kHz eines sogenannten Uhrenquarzes zugeführt wird.

Der Erfindung liegt nun die Aufgabe zugrunde, ein Verfahren und eine Anordnung zur Taktversorgung prozessorgesteuerter Geräte anzugeben, mit denen das Gerät mit wenig Aufwand stromsparend betrieben werden kann.

Diese Aufgabe wird durch die Merkmale der unabhängigen Ansprüche gelöst. Weiterbildungen ergeben sich aus den Unteransprüchen.

Die Erfindung beruht also auf dem Gedanken, der Prozessoreinrichtung in Abhängigkeit von der Prozessorlast unterschiedliche Taktfrequenzen zuzuführen, wobei die Echtzeituhr und in bestimmten Zeiten die Prozessoreinrichtung mittels desselben Quarzes getaktet werden.

Dadurch wird erreicht, daß der Stromverbrauch der Prozessoreinrichtung an die momentane Rechenleistung des Prozessors angepaßt werden kann und so der Prozessor in bestimmten Zeiten geringer oder keiner Prozessorlast mit einem geringen Stromverbrauch betrieben werden kann ohne einen zusätzlichen Quarz zu benötigen.

Insbesondere wenn es sich bei dem Quarz um einen sogenannten Uhrenquarz handelt, der mit einem ganzzahligen Bruchteil oder einem ganzzahligen Vielfachen von 32,768 kHz schwingt, ist die gleichzeitige Verwendung eines Quarzes zur Taktung einer Echtzeituhr und einer Prozessoreinrichtung besonders vorteilhaft.

Eine Ausgestaltung der Erfindung sieht vor, daß die Auswahl einer der Prozessoreinrichtung zuzuführenden Taktfrequenz, die niedriger ist als die aktuelle Taktfrequenz, durch die Prozessoreinrichtung selbst ausgelöst wird.

Andere Weiterbildungen der Erfindung sehen unterschiedliche Möglichkeiten vor, eine der Prozessoreinrichtung zuzuführende Taktfrequenz, die höher ist als die aktuelle der Prozessoreinrichtung zugeführte Taktfrequenz, auszuwählen.

Zur weiteren Reduzierung des Stromverbrauchs können in Abhängigkeit von der der Prozessoreinrichtung zugeführten Taktfrequenz nicht benötigte Komponenten des Gerätes zumindest zeitweise abgeschaltet werden.

Die Erfindung wird im Folgenden anhand bevorzugter Ausführungsbeispiele näher beschrieben, zu deren Erläuterung die nachstehend aufgelisteten Figuren dienen:
Figur 1 ein Blockschaltbild eines Taktversorgungssystems,
Figur 2 eine schematische Darstellung einer Ablaufsteuerung,
Figur 3 ein Blockschaltbild eines Mobilfunkgerätes,

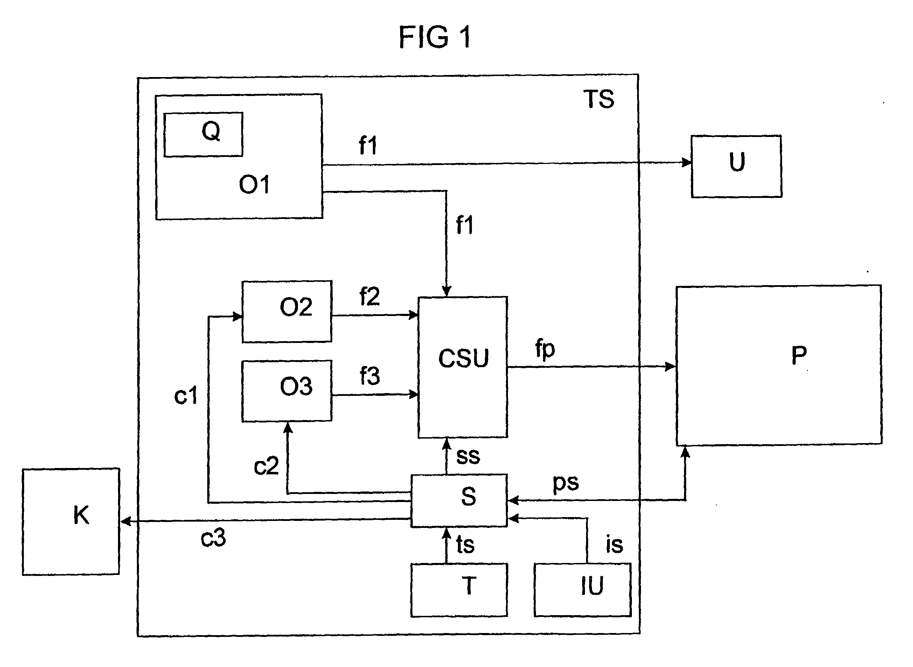

Figur 1 zeigt ein Taktversorgungssystem TS für ein prozessorgesteuertes Gerät. Dabei kann das Gerät einen oder mehrere Prozessoreinrichtungen P, wie beispielsweise einen digitalen Signalprozessor und/oder einen Mikrocontroler, enthalten.

Ein Uhrenquarz Q erzeugt eine Quarzfrequenz von 32,768 kHz oder ein ganzzahliges Vielfaches bzw. einen ganzzahligen Bruchteil dieser Frequenz. Die durch den Uhrenquarz erzeugten Sinusschwingungen werden durch eine Oszillatorschaltung O1 in Rechtecksignale der gleichen Frequenz umgesetzt. Dieses Taktsignal mit der Quarzfrequenz wird direkt oder gegebenenfalls indirekt nach einer Taktaufbereitung, Taktvervielfachung oder Taktteilung als ein Taktsignal mit der Frequenz f1 einer Echtzeituhr U zugeführt. Außerdem wird das Taktsignal mit der Quarzfrequenz direkt oder gegebenenfalls indirekt nach einer Taktaufbereitung, Taktvervielfachung oder Taktteilung einer Taktauswahleinheit CSU zugeführt. Im hier beschriebenen Ausführungsbeispiel wird der Taktauswahleinheit CSU und der Echtzeituhr U die gleiche Frequenz f1 zugeführt.

Außerdem wird der Taktauswahleinheit CSU ein von einem Oszillator 02 erzeugter Standbytakt f2 von 1,625 MHz und ein durch einen Oszillator 03 erzeugter Systemtakt f3 von 13 oder 26 MHz, der auch dem Hochfrequenzteil eines Funkgerätes zugeführt werden kann, zugeführt.

In Abhängigkeit von der Prozessorlast wird durch die Taktauswahleinheit CSU von den zur Verfügung stehenden Frequenzen f1, f2 oder f3 die Taktfrequenz fp ausgewählt, und dem Prozessor zugeführt, die es ermöglicht, den Prozessor entsprechend seiner Auslastung zu betreiben.

Die Steuerung der Taktauswahleinrichtung CSU und somit der Taktauswahl, erfolgt mittels Steuersignalen ss, die von einer Ablaufsteuerungseinheit S an die Taktauswahleinrichtung CSU übermittelt werden.

Die Ablaufsteuerung kann dabei in Abhängigkeit von unterschiedlichen Kriterien erfolgen:
- durch die Übermittlung von Prozessorsteuersignalen ps kann die Ablaufsteuerung durch den Prozessor P selbst beeinflußt werden;
- durch Interrupt-Steuersignale is kann die Ablaufsteuerung durch eine beispielsweise auch mittels des Uhrenquarzes niedrig getaktete Interrupt-Einheit beeinflußt werden, wenn externe Ereignisse, wie eine Tastatureingabe oder das Einlegen eines SIM-Moduls (Benutzeridentifizierungsmodul), dies erfordern;
- durch Timer-Steuersignale ts, die durch einen Timer nach dem Ablauf einer bestimmten Zeitspanne an die Ablaufsteuerungseinheit S übermittelt werden.

Neben der Steuerung der Taktauswahleinheit CSU ist die Ablaufsteuerungseinheit S auch für die Übermittlung von Ein- bzw. Abschaltsignalen c1, c2, c3 zuständig, mittels derer der Oszillator 02 zur Erzeugung des Standbytaktes, der Oszillator 03 zur Erzeugung des Systemtaktes oder andere Komponenten K des prozessorgesteuerten Gerätes, wie beispielsweise der Verstärker oder andere Elemente des Hochfrequenzteils HF eines Mobilfunkgerätes in Zeiten, in denen deren Betrieb nicht nötig ist, abgeschaltet werden können, und in Zeiten, in denen deren Betrieb erforderlich ist, wieder eingeschaltet werden können. Dies hängt insbesondere auch davon ab, in welchem Betriebszustand sich das prozessorgesteuerte Gerät momentan befindet. So kann man bei Mobilfunkgeräten FG zwischen einem empfangsbereiten Betriebszustand und einem Kommunikationszustand unterscheiden, wobei im empfangsbereiten Zustand der Prozessor nur in 5% der Zeit, nämlich in den Phasen des Empfangs der Pagingblöcke, eine nennenswerte Auslastung aufweist, so daß der empfangsbereite Betriebszustand in zwei weitere Betriebszustände unterteilt werden kann: Empfang von Pagingblöcken, kein Empfang von Pagingblöcken.

Bei einer Weiterbildung der Erfindung, die eine Prozessoreinrichtung P aufweist, die völlig taktlos geschaltet werden kann, kann in Zeiten keiner Prozessorlast der Prozessor P nicht mit einer auf den Uhrenquarz basierenden Frequenz f1 getaktet werden, sondern taktlos geschaltet werden. Um bei externen Ereignissen dennoch mit deren Verarbeitung beginnen zu können, werden diese durch eine externe Interrupteinheit IU erkannt, die auch in Zeiten, in denen die Prozessoreinrichtung P taktlos geschaltet ist, mit einem niedrigen Takt, beispielsweise einem auf dem Uhrenquarz basierenden Takt, getaktet wird.

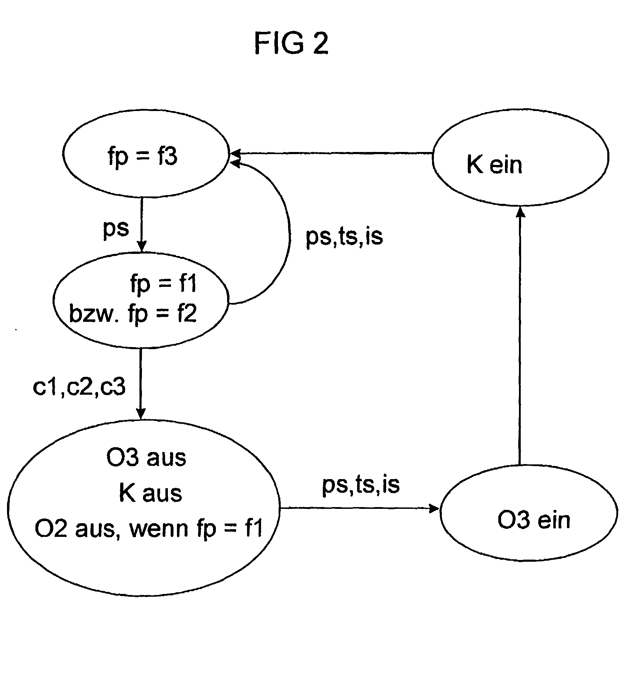

Figur 2 zeigt exemplarisch das Ablaufdiagramm einer Taktversorgung eines prozessorgesteuerten Gerätes:
- Das Gerät befindet sich zunächst im Grundzustand, in dem eine Prozessoreinrichtung P mit einer Frequenz fp = f3 getaktet wird. Durch die Übermittlung von Prozessorsteuersignalen ps von der Prozessoreinrichtung P zur Ablaufsteuerungseinheit S wird nach der Übermittlung der entsprechenden Steuersignale ss von der Ablaufsteuerungseinheit S zur Taktauswahleinrichtung CSU die Prozessoreinrichtung P mit einer Frequenz fp = f1 bzw. fp = f2 getaktet.
- Durch die Übermittlung von Abschaltsignalen c2,c1,c3 von der Ablaufsteuerungseinheit S zum Oszillator 03, zum Oszillator 02 (wenn fp = f1) oder zu anderen abzuschaltenden Komponenten K des Gerätes wird der Oszillator 03, der Oszillator 02 (wenn fp = f1) oder andere abzuschaltende Komponenten K des Gerätes abgeschaltet: 03 aus, K aus, 02 aus, wenn fp = f1.
- Durch die Übermittlung von Prozessorsteuersignalen ps, Interrupt-Steuersignalen is, Timer-Steuersignalen ts von den entsprechenden Einheiten zur Ablaufsteuerungseinheit S wird der Oszillator 03 wieder eingeschaltet: 03 ein.
- Durch die Übermittlung von Prozessorsteuersignalen ps, Interrupt-Steuersignalen is Timer-Steuersignalen ts von den entsprechenden Einheiten zur Ablaufsteuerungseinheit S werden die zuvor abgeschalteten Komponenten K des Gerätes mittels Einschaltsignale c3 wieder eingeschaltet (K ein) und das Gerät schließlich wieder in den Grundzustand versetzt.

So wird also in bestimmten Zeiten keiner bzw. geringer (je nach Ausführungsvariante) Prozessorlast der Prozessoreinrichtung eines prozessorgesteuerten Gerätes eine niedrige Taktfrequenz zugeführt, die durch den gleichen Quarz erzeugt wird, wie eine Taktfrequenz die einer Echtzeituhr des prozessorgesteuerten Gerätes zugeführt wird.

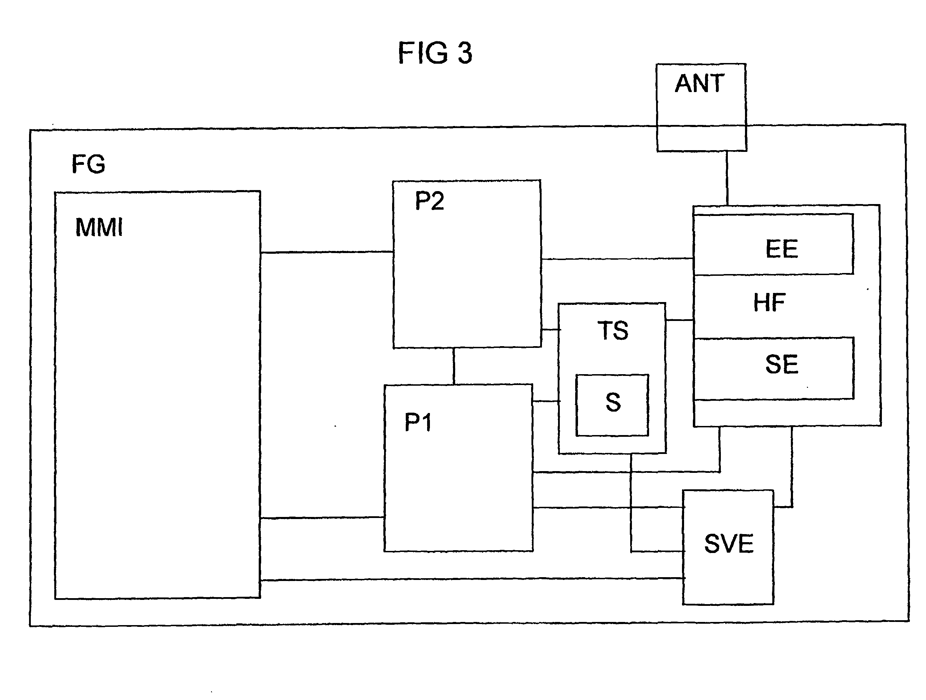

Figur 3 zeigt ein Mobilfunkgerät FG, bestehend aus einer Bedieneinheit MMI, einer Steuereinrichtung P1 und einer Verarbeitungseinrichtung P2, einer Stromversorgungseinrichtung SVE, einem Taktversorgungssystem TS, einem Hochfrequenzteil HF, bestehend aus einer Empfangseinrichtung EE, einer Sendeeinrichtung SE, einem Frequenzsynthesizer und einer Antenneneinrichtung ANT. Die einzelnen Elemente des Mobilfunkgerätes sind auch durch Leiterbahnen, Kabel- oder Bussysteme miteinander verbunden.

Die Steuereinrichtung P1 besteht im Wesentlichen aus einem programmgesteuerten Mikrocontroler und die Verarbeitungseinrichtung P2 aus einem digitalen Signalprozessor, wobei beide schreibend und lesend auf Speicherbausteine zugreifen können.

Der Mikrocontroler P1 steuert und kontrolliert alle wesentlichen Elemente und Funktionen des Mobilfunkgerätes FG und steuert zusammen mit der Ablaufsteuerungseinheit S im wesentlichen den Kommunikations- und Signalisierungsablauf. Auch das An- und Abschalten bestimmter Komponenten des Hochfrequenzteils HF kann über die Steuereinrichtung P1, die Ablaufsteuerungseinheit S bzw. das Taktversorgungssystem TS gesteuert werden. Außerdem kann dem Hochfrequenzteil HF bzw. dem entsprechenden Frequenzsynthesizer das im Taktversorgungssystem erzeugte Systemtaktsignal f3 zugeführt werden.

## Patentansprüche

1. Verfahren zur Taktversorgung prozessorgesteuerter Geräte,
- bei dem Mitteln zur Bestimmung einer Uhrzeit eine erste Taktfrequenz (f1) zugeführt wird,
- bei dem die einer Prozessoreinrichtung (P) zuzuführende Taktfrequenz (fp) in Abhängigkeit von der Prozessorlast ausgewählt wird,
- bei dem in Zeiten keiner bzw. geringer Prozessorlast einer Prozessoreinrichtung eine zweite Taktfrequenz (fp) zugeführt wird,
- bei dem die erste und zweite Taktfrequenz auf der Quarzfrequenz desselben Quarzes basieren, und
- bei dem die Prozessoreinrichtung (P) in Zeiten hoher Prozessorlast mit einem Systemtakt (f3) getaktet wird.

2. Verfahren nach einem der vorhergehenden Ansprüche, bei dem die Quarzfrequenz mittels eines Uhrenquarzes (Q) erzeugt wird.

3. Verfahren nach einem der vorhergehenden Ansprüche, bei dem die Prozessoreinrichtung (P) in Zeiten keiner Prozessorlast taktlos geschaltet wird.

4. Verfahren nach einem der vorhergehenden Ansprüche, bei dem die Prozessoreinrichtung (P) in Zeiten geringer Prozessorlast mit einer reduzierten Frequenz (f2) getaktet wird, die kleiner als die Frequenz des Systemtakts (f3) und größer als die Quarzfrequenz oder die davon abgeleitete Frequenz ist.

5. Verfahren nach einem der vorhergehenden Ansprüche, bei dem die Auswahl einer der Prozessoreinrichtung (P) zuzuführenden Taktfrequenz, die niedriger ist als die aktuelle der Prozessoreinrichtung (P) zugeführte Taktfrequenz, durch die Prozessoreinrichtung (P) ausgelöst wird.

6. Verfahren nach einem der vorhergehenden Ansprüche, bei dem die Auswahl einer der Prozessoreinrichtung (P) zuzuführenden Taktfrequenz, die höher ist als die aktuelle der Prozessoreinrichtung (P) zugeführte Taktfrequenz, durch die Prozessoreinrichtung (P) ausgelöst wird.

7. Verfahren nach einem der vorhergehenden Ansprüche, bei dem die Auswahl einer der Prozessoreinrichtung (P) zuzuführenden Taktfrequenz, die höher ist als die aktuelle, der Prozessoreinrichtung (P) zugeführte Taktfrequenz, durch externe Ereignisse ausgelöst wird.

8. Verfahren nach einem der vorhergehenden Ansprüche, bei dem die Auswahl einer der Prozessoreinrichtung (P) zuzuführenden Taktfrequenz, die höher ist als die aktuelle der Prozessoreinrichtung (P) zugeführte Taktfrequenz, nach Ablauf einer vorgegebenen Zeitspanne ausgelöst wird.

9. Verfahren nach einem der vorhergehenden Ansprüche, bei dem in Abhängigkeit von der der Prozessoreinrichtung (P) zugeführten Taktfrequenz nicht benötigte Komponenten (K) des Gerätes zeitweise abgeschaltet werden.

10. Anordnung (TS) zur Taktversorgung prozessorgesteuerter Geräte, mit
- Mitteln (CSU) zur Auswahl einer der Prozessoreinrichtung (P) zuzuführenden Frequenz in Abhängigkeit von der Prozessorlast,
- einem Quarz (Q) zur Erzeugung einer Quarzfrequenz,
- wobei eine auf der Quarzfrequenz oder einer davon abgeleiteten Frequenz basierende Taktfrequenz (f1) Mitteln (U) zur Bestimmung der Uhrzeit zugeführt wird, und
- in ersten Zeiten keiner bzw. geringer Prozessorlast eine auch auf der Quarzfrequenz oder einer davon abgeleiteten Frequenz basierende Taktfrequenz (fp) der Prozessoreinrichtung (P) zugeführt wird, und
- die Prozessoreinrichtung (P) in dritten Zeiten mit dem Systemtakt (f3) getaktet wird.

## Claims

1. Method for supplying a clock to processor-controlled apparatuses,
- in which a first clock frequency (f1) is fed to means for determining a clock time,
- in which the clock frequency (fp) which is to be fed to a processor device (P) is selected as a function of the processor load,
- in which a second clock frequency (fp) is fed to a processor device at times of no processor load, or low processor load,
- in which the first and second clock frequencies are based on the quartz frequency of the same quartz, and
- in which the processor device (P) is clocked with a system clock (f3) at times of high processor load.

2. Method according to one of the preceding claims, in which the quartz frequency is generated by means of a clock quartz (Q).

3. Method according to one of the preceding claims, in which the processor device (P) is switched to a clockless state in times of no processor load.

4. Method according to one of the preceding claims, in which the processor device (P) is clocked with a reduced frequency (f2) in times of low processor load, said reduced frequency (f2) being lower than the frequency of the system clock (f3) and higher than the quartz frequency or the frequency derived therefrom.

5. Method according to one of the preceding claims, in which the selection of a clock frequency which is to be fed to the processor device (P) and which is lower than the current frequency fed to the processor device (P) is initiated by the processor device (P).

6. Method according to one of the preceding claims, in which the selection of a clock frequency which is to be fed to the processor device (P) and which is higher than the current clock frequency fed to the processor device (P) is initiated by the processor device (P).

7. Method according to one of the preceding claims, in which the selection of a clock frequency which is to be fed to the processor device (P) and which is higher than the current clock frequency fed to the processor device (P) is initiated by external events.

8. Method according to one of the preceding claims, in which the selection of a clock frequency which is to be fed to the processor device (P) and which is higher than the current clock frequency fed to the processor device (P) is initiated after the expiry of a predefined time period.

9. Method according to one of the preceding claims, in which components (K) of the apparatus which are not required are temporarily switched off as a function of the clock frequency fed to the processor device (P).

10. Arrangement (TS) for supplying a clock to processor-controlled apparatuses, having
- means (CSU) for selecting, as a function of the processor load, a frequency which is to be fed to the processor device (P),
- a quartz (Q) for generating a quartz frequency,
- wherein a clock frequency (f1) based on the quartz frequency or a frequency derived therefrom is fed to means (U) for determining the clock time, and
- a clock frequency (fp) which is also based on the quartz frequency or on a frequency derived therefrom is fed to the processor device (P) in first times of no processor load or low processor load, and
- the processor device (P) is clocked with the system clock (f3) in third times.

## Revendications

1. Procédé d'alimentation en fréquence d'horloge d'appareils commandés par processeur,
- dans lequel une première fréquence d'horloge (f1) est apportée à des moyens de détermination d'une heure,
- dans lequel une fréquence d'horloge (fp) qui doit être amenée à un dispositif à processeur (P) est sélectionnée en fonction de la charge du processeur,
- dans lequel, pendant des périodes où la charge du processeur est nulle resp. faible, une deuxième fréquence d'horloge (fp) est délivrée au dispositif à processeur,
- dans lequel la première et la deuxième fréquence d'horloge sont basées sur la fréquence de quartz d'un même quartz, et
- dans lequel, pendant des périodes où la charge du processeur est élevée, le dispositif à processeur (P) est cadencé à une fréquence d'horloge du système (f3).

2. Procédé selon l'une des revendications précédentes, dans lequel la fréquence de quartz est créée au moyen d'un quartz d'horloge (Q).

3. Procédé selon l'une des revendications précédentes, dans lequel le dispositif à processeur (P) est branché sans cadençage pendant des périodes où la charge du processeur est nulle.

4. Procédé selon l'une des revendications précédentes, dans lequel, pendant des périodes où la charge du processeur est faible, le dispositif à processeur (P) est cadencé à une fréquence (f2) réduite qui est inférieure à la fréquence d'horloge du système (f3) et qui est supérieure à la fréquence de quartz ou à la fréquence qui en est dérivée.

5. Procédé selon l'une des revendications précédentes, dans lequel la sélection d'une fréquence d'horloge à délivrer au dispositif à processeur (P), qui est inférieure à la fréquence d'horloge délivrée à ce moment au dispositif à processeur (P), est déclenchée par le dispositif à processeur (P).

6. Procédé selon l'une des revendications précédentes, dans lequel la sélection d'une fréquence d'horloge à apporter au dispositif à processeur (P), qui est supérieure à la fréquence d'horloge délivrée à ce moment au dispositif à processeur (P), est déclenchée par le dispositif à processeur (P).

7. Procédé selon l'une des revendications précédentes, dans lequel la sélection d'une fréquence d'horloge à apporter au dispositif à processeur (P), qui est supérieure à la fréquence d'horloge délivrée à ce moment au dispositif à processeur (P), est déclenchée par des événements extérieurs.

8. Procédé selon l'une des revendications précédentes, dans lequel la sélection d'une fréquence d'horloge à délivrer au dispositif à processeur (P), qui est supérieure à la fréquence d'horloge délivrée à ce moment au dispositif à processeur (P), est déclenchée après l'écoulement d'un laps de temps prédéterminé.

9. Procédé selon l'une des revendications précédentes, dans lequel des composants (K) de l'appareil non utilisés sont débranchés temporairement en fonction de la fréquence d'horloge délivrée au dispositif à processeur (P).

10. Agencement (TS) pour l'alimentation en fréquence d'horloge d'appareils commandés par processeur, comprenant :
- des moyens (CSU) pour la sélection en fonction de la charge du processeur d'une fréquence à délivrer au dispositif à processeur (P),
- un quartz (Q) pour la création d'une fréquence de quartz,
- une fréquence d'horloge (f1) basée sur la fréquence de quartz ou sur une fréquence qui en est dérivée étant délivrée à des moyens (U) de détermination de l'heure, et
- au cours de premières périodes pendant lesquelles la charge du processeur est nulle resp. faible, une fréquence d'horloge (fp) basée sur la fréquence de quartz ou sur une fréquence qui en est dérivée est délivrée à l'unité à processeur (P), et
- au cours de troisièmes périodes, le dispositif à processeur (P) est cadencé par la fréquence d'horloge (f3) du système.
